# EUROPEAN PATENT APPLICATION

(11) **EP 4 543 034 A1**
(43) Date of publication of application: **23.04.2025**
(21) Application number: 23827041.7
(22) Date of filing: 12.06.2023
(51) Int. Cl.: H04N 25/707, H04N 25/77

(54) **LIGHT DETECTION DEVICE AND ELECTRONIC APPARATUS**

(30) Priority: 20.06.2022 JP 2022099104
(71) Applicant: Sony Semiconductor Solutions Corporation, Atsugi-shi, Kanagawa 243-0014 (JP)
(72) Inventor: MOCHIZUKI, Futa, Atsugi-shi, Kanagawa 243-0014 (JP); NIWA, Atsumi, Atsugi-shi, Kanagawa 243-0014 (JP)
(74) Representative: MFG Patentanwälte Meyer-Wildhagen Meggle-Freund Gerhard PartG mbB
(86) International application number: PCT/JP2023/021792
(87) International publication number: WO 2023/248855

(57) **Abstract**

To acquire gradation information and detect an event without increasing a circuit area.

Provided is a photodetection device including a first substrate and a second substrate stacked on each other, in which the first substrate has a pixel group including a first pixel that generates a pixel signal according to a light amount of incident light and a second pixel that detects a luminance change of the incident light, the second substrate has an event detection circuit that detects an event based on the luminance change of the second pixel, and at least a part of the event detection circuit is disposed in a region other than a region of a same size facing the pixel group on the second substrate.

## Description

### TECHNICAL FIELD

The present disclosure relates to a photodetection device and an electronic apparatus.

### BACKGROUND ART

There is known an imaging device that detects an event when the event occurs in an imaging scene in which an absolute value of a luminance change amount exceeds a predetermined threshold (see Patent Document 1). This type of imaging device may be referred to as an event base vision sensor (EVS).

Furthermore, there has also been proposed an imaging device in which each pixel can acquire gradation information and detect an event (Patent Document 1).

Moreover, there has also been proposed an imaging device in which a pixel (hereinafter, a gradation pixel) for acquiring gradation information and a pixel (hereinafter, an EVS pixel) for detecting an event are separately provided.

### CITATION LIST

### PATENT DOCUMENT

Patent Document 1: Japanese Patent Application Laid-Open No. 2020-88724

### SUMMARY OF THE INVENTION

### PROBLEMS TO BE SOLVED BY THE INVENTION

In order to generate a high-resolution captured image in an imaging device, it is necessary to increase a number of pixels, and as the number of pixels increases, a circuit scale of peripheral circuits such as an analog-digital (AD) converter that processes a pixel signal output from each pixel and a signal processing circuit increases.

Therefore, for example, an imaging device in which two chips are stacked has been put into practical use. In this type of imaging device, for example, a pixel array unit is disposed on an upper chip, and peripheral circuits such as an AD converter and a signal processing circuit are disposed on a lower chip.

The EVS pixel described above requires an event detection circuit in addition to a pixel circuit. The event detection circuit is often disposed on the lower chip. In a case where EVS pixels are provided in the pixel array unit as many as the number of gradation pixels, it is necessary to dispose the event detection circuit in almost all regions of the lower chip facing the pixel array unit, and other peripheral circuits have to be disposed outside the event detection circuit, and a chip size increases.

Therefore, the present disclosure provides a photodetection device and an electronic apparatus capable of acquiring gradation information and detecting an event without increasing a circuit area.

### SOLUTIONS TO PROBLEMS

In order to solve the problem described above, according to the present disclosure, there is provided a photodetection device including:
a first substrate and a second substrate stacked on each other,
in which the first substrate has a pixel group including a first pixel that generates a pixel signal according to a light amount of incident light and a second pixel that detects a luminance change of the incident light,
the second substrate has an event detection circuit that detects an event based on the luminance change of the second pixel, and
at least a part of the event detection circuit is disposed in a region other than a region of a same size facing the pixel group on the second substrate.

The first substrate may have a plurality of the pixel groups including a plurality of the first pixels and a plurality of the second pixels,
the second substrate may have a plurality of the event detection circuits disposed adjacent to each other, and
at least a part of the plurality of event detection circuits may be disposed in a region other than a region of a same size facing the plurality of pixel groups on the second substrate.

The first substrate may have a pixel array unit including the plurality of pixel groups, and
the event detection circuit may be disposed in a region of a same size facing the pixel array unit on the second substrate.

The event detection circuit may output a signal indicating whether or not each of the plurality of second pixels has detected the event in synchronization with a predetermined frame period.

The event detection circuit may have a first differentiator and a second differentiator that respectively time-differentiate electric signals photoelectrically converted by two of the second pixels having different directions of the luminance change.

The event detection circuit may output an event signal indicating that the event has been detected each time the event detection circuit detects the event, regardless of a frame period.

At least a part of the second pixels may be disposed on the second substrate.

The second pixel may have:
a photoelectric conversion element;
a charge-voltage conversion unit that generates a voltage signal obtained by logarithmic conversion of a charge photoelectrically converted by the photoelectric conversion element; and
a buffer circuit that buffers the voltage signal,
the photoelectric conversion element, the charge-voltage conversion unit, and a portion of the buffer circuit may be disposed on the first substrate, and
a portion other than the portion of the buffer circuit may be disposed on the second substrate.

The second pixel may have:
a photoelectric conversion element; and
a charge-voltage conversion unit that converts a charge photoelectrically converted by the second pixel into a voltage signal subjected to logarithmic conversion, and
the charge-voltage conversion unit may have a diode connected between a cathode of the photoelectric conversion element and a power supply voltage node.

The second pixel may have:
a photoelectric conversion element; and
a charge-voltage conversion unit that converts a charge photoelectrically converted by the second pixel into a voltage signal subjected to logarithmic conversion, and
the charge-voltage conversion unit may have:
   an amplifier connected to a cathode of the photoelectric conversion element; and
   a bias circuit that supplies a bias current to the amplifier.

The charge-voltage conversion unit may have a plurality of transistors of a same conductivity type, including the bias circuit.

A plurality of transistors of a first conductivity type is included other than the bias circuit in the charge-voltage conversion unit, and
the bias circuit may have a transistor of a second conductivity type.

The event detection circuit may have a first circuit portion disposed on the first substrate and a second circuit portion disposed on the second substrate.

The event detection circuit may have:
a differentiator that time-differentiates a voltage signal output from the second pixel;
a source follower circuit that is connected to an output node of the differentiator; and
a comparator that is connected to an output node of the source follower circuit and detects the event on the basis of a result of comparing an output signal of the source follower circuit with a predetermined reference signal,
the first circuit portion may have the differentiator and the source follower circuit, and
the second circuit portion may have the comparator.

The event detection circuit may have:
a differentiator that time-differentiates a voltage signal output from the second pixel;
a source follower circuit that is connected to an output node of the differentiator; and
a comparator that is connected to an output node of the source follower circuit and detects the event on the basis of a result of comparing an output signal of the source follower circuit with a predetermined reference signal,
the first circuit portion may have the differentiator, the source follower circuit, and a portion of the comparator, and
the second circuit portion may have a portion other than the portion of the comparator.

Two or more of the first circuit portions connected to two or more of the second pixels may share one of the second circuit portions.

A switch that is connected to output nodes of the two or more first circuit portions may be further included, and
the switch may connect any one output node of the two or more first circuit portions to an input node of the second circuit portion.

The switch may be disposed on the first substrate or the second substrate.

The event detection circuit may be provided for each of the plurality of second pixels, and
a plurality of the event detection circuits may be disposed close to each other in a partial region on the second substrate.

According to the present disclosure, there is provided an electronic apparatus including:
a photodetection device; and
a signal processing section that performs signal processing on the basis of a pixel signal and an event signal output from the photodetection device,
in which the photodetection device includes:
   a first substrate and a second substrate stacked on each other,
   the first substrate has a pixel group including a first pixel that generates the pixel signal according to a light amount of incident light and a second pixel that detects a luminance change of the incident light,
   the second substrate has an event detection circuit that detects an event based on the luminance change of the second pixel, and
   at least a part of the event detection circuit is disposed in a region other than a region of a same size facing the pixel group on the second substrate.

### BRIEF DESCRIPTION OF DRAWINGS

Fig. 1 is a block diagram illustrating a schematic configuration of a photodetection device according to a first embodiment.
Fig. 2 is a diagram schematically illustrating a chip configuration of the photodetection device according to the first embodiment.
Fig. 3 is a circuit diagram illustrating a circuit configuration of a gradation pixel.
Fig. 4 is a circuit diagram illustrating internal configurations of an EVS pixel and an event detection circuit.
Fig. 5 is a diagram illustrating a drive timing of the photodetection device according to the first embodiment.
Fig. 6 is a diagram illustrating a modification of the chip configuration of Fig. 2.
Fig. 7 is a circuit diagram of a modification of the event detection circuit of Fig. 4.
Fig. 8 is a diagram illustrating a drive timing of a photodetection device 1 including the event detection circuit of Fig. 7.
Fig. 9 is a diagram illustrating a chip configuration of a photodetection device according to a comparative example.
Fig. 10 is a circuit diagram illustrating internal configurations of an EVS pixel, an event detection circuit, a reading circuit, and an EVS digital circuit in Fig. 9.
Fig. 11 is a diagram illustrating a chip configuration of a photodetection device according to a second embodiment.
Fig. 12 is a circuit diagram illustrating internal configurations of an EVS pixel and an event detection circuit according to the second embodiment.
Fig. 13A is a circuit diagram illustrating a first separation between the EVS pixel and the event detection circuit.
Fig. 13B is a circuit diagram illustrating a second separation between the EVS pixel and the event detection circuit.
Fig. 13C is a circuit diagram illustrating a third separation between the EVS pixel and the event detection circuit.
Fig. 13D is a circuit diagram illustrating a fourth separation between the EVS pixel and the event detection circuit.
Fig. 13E is a circuit diagram illustrating a fifth separation between the EVS pixel and the event detection circuit.
Fig. 14 is a circuit diagram illustrating an example in which at least a part of the event detection circuit is shared by a plurality of EVS pixels.
Fig. 15 is a diagram illustrating a chip configuration in which a switch is disposed on an upper chip.
Fig. 16 is a circuit diagram corresponding to Fig. 15.
Fig. 17 is a circuit diagram illustrating a circuit arrangement example of an upper chip and a lower chip.
Fig. 18 is a circuit diagram illustrating an example of a photodetection device having a three-layer structure.
Fig. 19 is a diagram in which a plurality of event detection circuits is disposed in a column direction.
Fig. 20 is a block diagram illustrating an example of a schematic configuration of a vehicle control system.
Fig. 21 is an explanatory diagram illustrating an example of installation positions of an outside-vehicle information detecting section and an imaging section.

### MODE FOR CARRYING OUT THE INVENTION

Hereinafter, embodiments of a photodetection device and an electronic apparatus will be described with reference to the drawings. Hereinafter, main components of the photodetection device and the electronic apparatus will be mainly described, but the photodetection device and the electronic apparatus may have components and functions that are not illustrated or described. The following description does not exclude the components and the functions that are not illustrated or described.

### (First Embodiment)

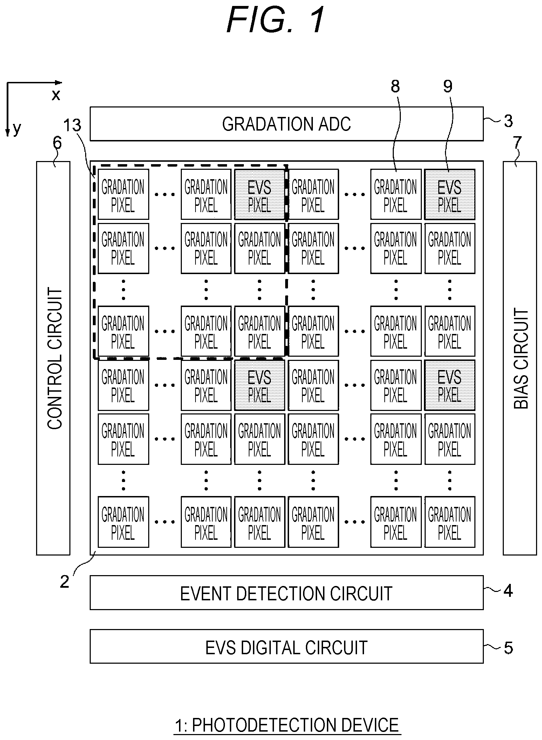

Fig. 1 is a block diagram illustrating a schematic configuration of a photodetection device 1 according to a first embodiment. The photodetection device 1 of Fig. 1 includes a pixel array unit 2, a gradation analog-digital converter (ADC) 3, an event detection circuit 4, an EVS digital circuit 5, a control circuit 6, and a bias circuit 7.

The pixel array unit 2 has a plurality of gradation pixels 8 and a plurality of EVS pixels 9. It is assumed that the number of gradation pixels 8 in the pixel array unit 2 is larger than the number of EVS pixels 9, but a ratio between the number of gradation pixels 8 and the number of EVS pixels 9 is arbitrary.

The plurality of gradation pixels 8 and the plurality of EVS pixels 9 are disposed in a row direction x and a column direction y of the pixel array unit 2. Fig. 1 illustrates an example in which the pixel array unit 2 is divided into a plurality of pixel groups 13. Each pixel group 13 has two or more gradation pixels 8 and one EVS pixel 9. Note that the number of pixel groups 13 in the pixel array unit 2 is not particularly limited.

Each of the gradation pixel 8 and the EVS pixel 9 has a photoelectric conversion element 14 (photodiode) and a pixel circuit. The pixel circuit for the gradation pixel 8 converts a charge photoelectrically converted by the photoelectric conversion element 14 of the gradation pixel 8 into a voltage to generate a pixel signal. The pixel signal includes gradation information. The pixel circuit for EVS generates a voltage signal corresponding to the charge photoelectrically converted by the photoelectric conversion element 14 of the EVS pixel 9. This voltage signal is used to detect a luminance change amount. A specific circuit configuration of the gradation pixel 8 and the EVS pixel 9 will be described later.

The pixel signal photoelectrically converted by the gradation pixel 8 is transmitted to the gradation ADC 3 via a signal line extending in the column direction y. The voltage signal corresponding to the charge photoelectrically converted by the EVS pixel 9 is transmitted to the event detection circuit 4.

The gradation ADC 3 performs AD conversion of pixel signals on a plurality of signal lines disposed at predetermined intervals along the row direction x to generate digital pixel signals.

Although one event detection circuit 4 is illustrated in Fig. 1, in practice, the event detection circuit 4 is provided for each individual EVS pixel 9, and detects whether or not an event has occurred by comparing the voltage signal corresponding to the charge photoelectrically converted by the corresponding EVS pixel 9 with a threshold voltage. More specifically, the event detection circuit 4 outputs an event signal indicating whether or not an event has occurred. The event signal includes, for example, an on-event signal and an off-event signal. The on-event signal is a signal that detects an on-event indicating that a luminance change amount of the EVS pixel 9 exceeds a predetermined threshold. For example, when the on-event signal becomes high logic, it indicates that an on-event has occurred. The off-event signal is a signal for detecting an off-event indicating that the luminance change amount of the EVS pixel 9 falls below the predetermined threshold. For example, when the off-event signal becomes high logic, it indicates that an off-event has occurred.

In the present embodiment, on-event signals detected by all the EVS pixels 9 in the pixel array unit 2 are simultaneously output, and off-event signals detected by all the EVS pixels 9 in the pixel array unit 2 are simultaneously output at another timing. In the present specification, the on-event signal and the off-event signal are collectively referred to as event signals.

The event detection circuit 4 may simultaneously detect an on-event and an off-event and simultaneously output an on-event signal and an off-event signal. In this case, the event signal will be two bits, one bit representing the on-event signal and the other bit representing the off-event signal.

The EVS digital circuit 5 generates digital signals obtained by performing AD conversion on a plurality of event signals detected by the plurality of EVS pixels 9 in the pixel array unit 2.

The control circuit 6 generates various control signals used by each unit in the photodetection device 1 of Fig. 1 and supplies the control signals to each unit. The bias circuit 7 generates various bias signals used by each unit in the photodetection device 1 of Fig. 1.

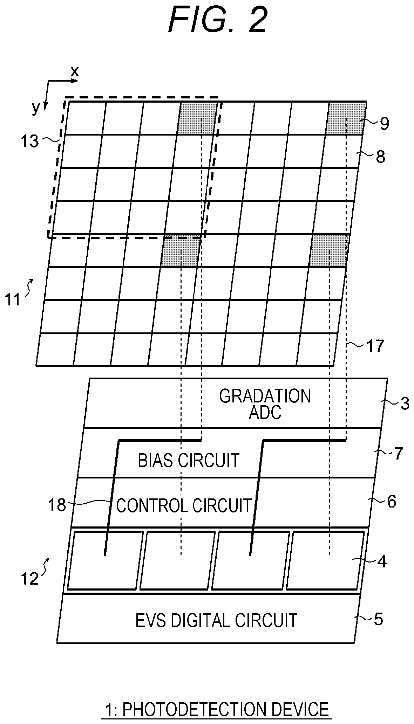

Fig. 2 is a diagram schematically illustrating a chip configuration of the photodetection device 1 according to the first embodiment. As illustrated in Fig. 2, the photodetection device 1 according to the first embodiment can be configured by stacking a plurality of chips. Fig. 2 illustrates an example in which the photodetection device 1 is configured by stacking an upper chip (first substrate) 11 and a lower chip (second substrate) 12.

The upper chip 11 is assumed to be disposed on a light incident side. Therefore, the pixel array unit 2 of Fig. 1 is disposed on the upper chip 11. On the lower chip 12, the gradation ADC 3, the event detection circuit 4, the EVS digital circuit 5, the control circuit 6, and the bias circuit 7 in Fig. 1 are disposed. Note that a part of circuits disposed on the lower chip 12 in Fig. 2 may be disposed on the upper chip 11. Furthermore, as described later, the photodetection device 1 of Fig. 1 may be configured by stacking three or more chips.

Fig. 2 illustrates an example in which the pixel array unit 2 has four pixel groups 13, and each pixel group 13 has a plurality of gradation pixels 8 and one EVS pixel 9, but the number of pixel groups 13 included in the pixel array unit 2 is arbitrary. The lower chip 12 of Fig. 2 is provided with four event detection circuits 4 corresponding to the four EVS pixels 9 in the upper chip 11. The four event detection circuits 4 are disposed adjacent to each other in a line along the row direction x, for example.

As described above, at least a part of the event detection circuit 4 in Fig. 2 is disposed in a region other than a region of a same size facing the pixel group 13 in the lower chip 12. Therefore, in a region immediately below the pixel group 13 in the lower chip 12, circuits (for example, the gradation ADC 3, the control circuit 6, the bias circuit 7, the EVS digital circuit 5, and the like) other than the event detection circuit 4 can be disposed, and a size of the lower chip 12 can be reduced. Note that, in the example of Fig. 2, the event detection circuits 4 are collectively disposed in a partial region in the region of the lower chip 12 immediately below the pixel array unit 2 on the upper chip 11.

In Fig. 2, the gradation ADC 3, the bias circuit 7, the control circuit 6, the event detection circuit 4, and the EVS digital circuit 5 are disposed along the column direction y of the lower chip 12, but this is an example and may be arbitrarily changed.

The upper chip 11 and the lower chip 12 are bonded by Cu-Cu bonding, vias, bumps, or the like to perform signal transmission. Fig. 2 illustrates wiring paths 17 that connect four EVS pixels 9 and four event detection circuits 4. The wiring path 17 extends from each EVS pixel 9 to the lower chip 12 in a vertical direction via, for example, Cu-Cu bonding and is directly connected to the corresponding event detection circuit 4, or is connected to the corresponding event detection circuit 4 via a wiring pattern 18 on the lower chip 12.

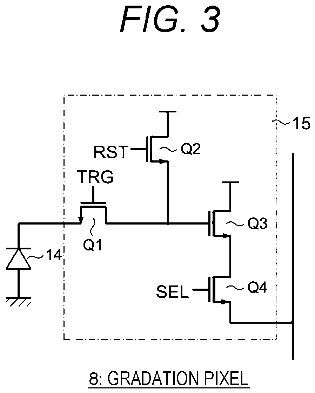

Fig. 3 is a circuit diagram illustrating a circuit configuration of the gradation pixel 8. As illustrated in Fig. 3, the gradation pixel 8 has the photoelectric conversion element 14 and a pixel circuit 15. The pixel circuit 15 of the gradation pixel 8 has a transfer transistor Q1, a reset transistor Q2, an amplification transistor Q3, and a selection transistor Q4. All the transistors Q1 to Q4 in the pixel circuit 15 are NMOS transistors.

An anode of the photoelectric conversion element 14 is set as a reference voltage node, and a cathode is connected to a source of the transfer transistor Q1. A drain of the transfer transistor Q1 is connected to a floating diffusion, a source of the reset transistor Q2, and a gate of the amplification transistor Q3. A drain of the amplification transistor Q3 is connected to a power supply voltage node, and a source of the amplification transistor Q3 is connected to a drain of the selection transistor Q4. A source of the selection transistor Q4 is connected to a signal line.

Note that Fig. 3 is an example of a circuit configuration of the pixel circuit 15 of the gradation pixel 8, and various circuit configurations different from those in Fig. 3 can be taken.

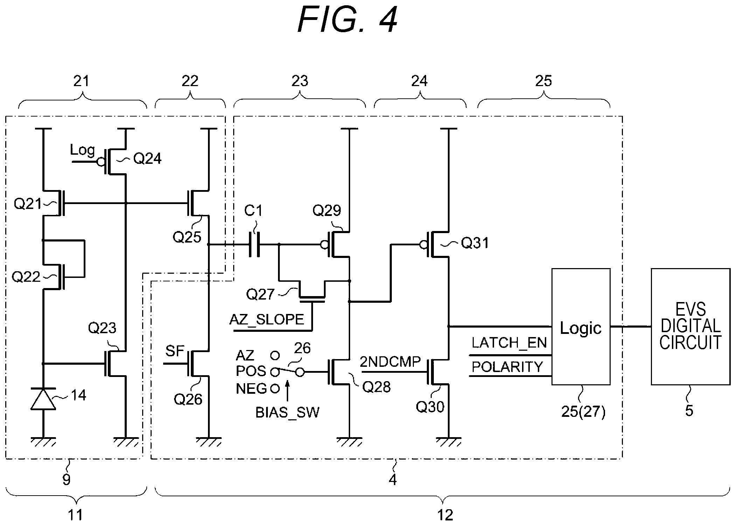

Fig. 4 is a circuit diagram illustrating internal configurations of the EVS pixel 9 and the event detection circuit 4. The EVS pixel 9 has a logarithmic response section 21 and a buffer 22. The logarithmic response section 21 generates a voltage signal obtained by logarithmic conversion of a charge photoelectrically converted by the photoelectric conversion element 14. By the logarithmic conversion, a dynamic range at the time of photoelectric conversion of the EVS pixel 9 can be expanded, and sensitivity can be improved.

The logarithmic response section 21 has NMOS transistors Q21 to Q23 and a PMOS transistor Q24. The transistor Q22 has a gate and a drain connected, and functions as a diode. A drain of the transistor Q21 is connected to a power supply voltage node, and a source of the transistor Q21 is connected to a gate and a drain of the transistor Q22. A gate of the transistor Q21 is connected to a drain of the transistor Q23 and a drain of the transistor Q24, and this connection node is an output node of the logarithmic response section 21. A source of the transistor Q24 is connected to the power supply voltage node, and a predetermined bias voltage Vlog is applied to a gate of the transistor Q24.

The buffer 22 has NMOS transistors Q25 and Q26 cascode-connected between the power supply voltage node and a ground voltage node. An output node of the logarithmic response section 21 is connected to a gate of the transistor Q25. A reference voltage SF is applied to a gate of the transistor Q26. A source of the transistor Q25 and a drain of the transistor Q26 are output nodes of the buffer 22. The transistor Q26 functions as a source follower circuit, and a voltage signal having a waveform corresponding to a source voltage of the transistor Q24 is output from the source of the transistor Q25.

Fig. 4 illustrates an example in which the logarithmic response section 21 in the EVS pixel 9 and the transistor Q25 in the buffer 22 are disposed on the upper chip 11, and the transistor Q26 in the buffer 22 is disposed on the lower chip 12. This is an example, and for example, the transistor Q26 in the buffer 22 may be disposed on the upper chip 11, or the transistors Q25 and Q26 configuring the buffer 22 may be disposed on the lower chip 12.

The event detection circuit 4 of Fig. 4 has a synchronous configuration, and outputs an event signal indicating whether or not each of the plurality of EVS pixels 9 has detected an event in synchronization with a predetermined frame period. The event detection circuit 4 in Fig. 4 has a differentiation circuit 23, a comparator 24, and an output circuit 25. The differentiation circuit 23 has a capacitor C1, NMOS transistors Q27 and Q28, and a PMOS transistor Q29.

The capacitor C1 is connected between the output node of the buffer 22 and a gate of the transistor Q29. The capacitor C1 supplies a current corresponding to a change amount of a voltage signal Vp that is a time derivative of the voltage signal Vp output from the buffer 22 to the gate of the transistor Q29. The transistors Q29 and Q28 are cascode-connected between the power supply voltage node and the ground voltage node. A switch 26 that selects three types of bias voltages is connected to a gate of the transistor Q28. On the basis of a switching control signal BIAS_SW output from the control circuit 6, the switch 26 selects any one of a bias voltage AZ for auto-zero, a bias voltage POS for positive event detection, and a bias voltage NEG for negative event detection. By the switching control of the switch 26, the gate of the transistor Q28 is set to an optimum bias voltage.

The differentiation circuit 23 outputs a differential signal from a drain of the transistor Q28 and a source of the transistor Q29. This differential signal is input to the comparator 24.

The comparator 24 has a PMOS transistor Q31 and an NMOS transistor Q30 cascode-connected between the power supply voltage node and the ground voltage node. A threshold signal 2NDCOMP is applied to a gate of the transistor Q30. A gate of the transistor Q31 is connected to the source of the transistor Q29, and the differential signal output from the differentiation circuit 23 is input to the gate of the transistor Q31. When a voltage level of the differential signal is higher than a voltage level of the threshold signal 2NDCOMP, the comparator 24 outputs a high-level event signal indicating that an event has been detected.

The comparator 24 of Fig. 4 can switch and output an on-event signal or an off-event signal from the source of the transistor Q31 by switching a gate voltage of the transistor Q28 with the switch 26.

The output circuit 25 has a logic circuit (logic) 27 including a logic gate, a flip-flop, and the like. Control signals LATCH_EN and POLARITY output from the control circuit 6 are input to the logic circuit 27. The control signal LATCH_EN is a signal that defines a timing for latching the event signal. The control signal POLARITY is a signal that specifies a polarity of the event signal. The logic circuit 27 outputs the event signal in synchronization with a frame period. The event signal output from the logic circuit 27 is input to the EVS digital circuit 5.

The EVS digital circuit 5 generates a digital signal on the basis of event signals detected in all the EVS pixels 9 in the pixel array unit 2.

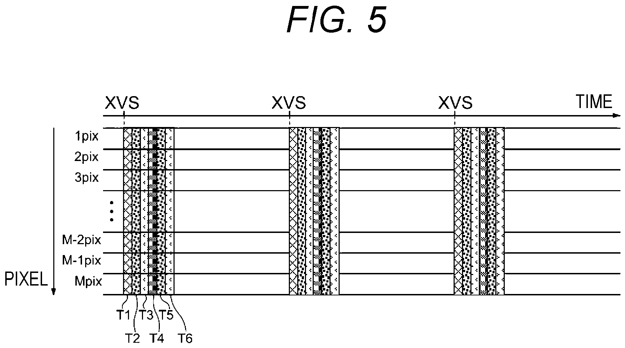

Fig. 5 is a diagram illustrating a drive timing of the photodetection device 1 according to the first embodiment. Fig. 5 illustrates drive timings of the gradation pixels 8 and the EVS pixels 9 for three frames. The photodetection device 1 according to the first embodiment reads the gradation pixel 8 and the EVS pixel 9 in synchronization with a frame synchronization signal XVS.

In the example of Fig. 5, in one frame period, first, on-events of all the EVS pixels 9 in the pixel array unit 2 are simultaneously detected (period T1). Next, a reset operation of all the EVS pixels 9 in the pixel array unit 2 is performed (period T2). Next, on-event signals of all the EVS pixels 9 in the pixel array unit 2 are simultaneously read (period T3). Next, off-events of all the EVS pixels 9 in the pixel array unit 2 are detected (period T4). Next, the reset operation of all the EVS pixels 9 in the pixel array unit 2 is performed (period T5). Next, off-event signals of all the EVS pixels 9 in the pixel array unit 2 are read (period T6). Thereafter, reading of all the gradation pixels 8 in the pixel array unit 2 is performed (period T7).

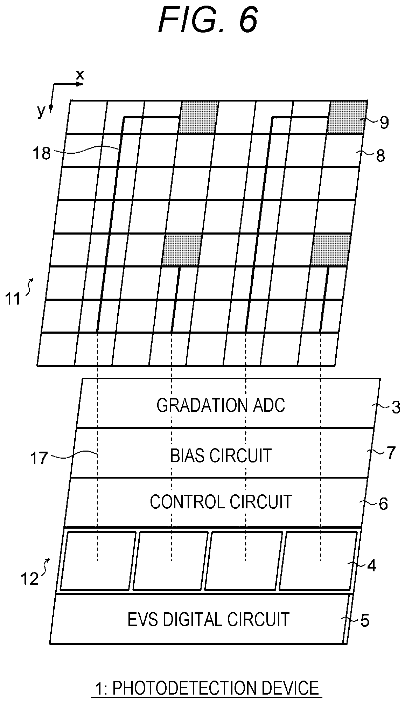

Fig. 2 illustrates an example in which the wiring path 17 is provided from the EVS pixel 9 disposed on the upper chip 11 to the lower chip 12 by Cu-Cu bonding and the like, and the wiring pattern 18 on the lower chip 12 is connected to the corresponding event detection circuit 4, but the wiring pattern may be provided on the upper chip 11 side. Fig. 6 is a diagram illustrating a modification of the chip configuration of Fig. 2. In Fig. 6, the wiring pattern on the upper chip 11 is disposed from the EVS pixel 9 disposed on the upper chip 11 to a position immediately above the corresponding event detection circuit 4 on the lower chip 12, and is directly connected to the event detection circuit 4 of the lower chip 12 from this position by Cu-Cu bonding and the like. Since only the pixel array unit 2 is disposed on the upper chip 11, the chip configuration of Fig. 6 can be implemented by disposing the wiring pattern inside the pixel array unit 2 or in a free region outside the pixel array unit 2.

As illustrated in the timing chart of Fig. 5, the event detection circuit 4 of Fig. 4 has one differentiation circuit 23 and one comparator 24, and detects an on-event signal and an off-event signal at different timings. As a modification of Fig. 4, the differentiation circuit 23 and the comparator 24 for the on-event signal and the differentiation circuit 23 and the comparator 24 for the off-event signal may be provided in the event detection circuit 4.

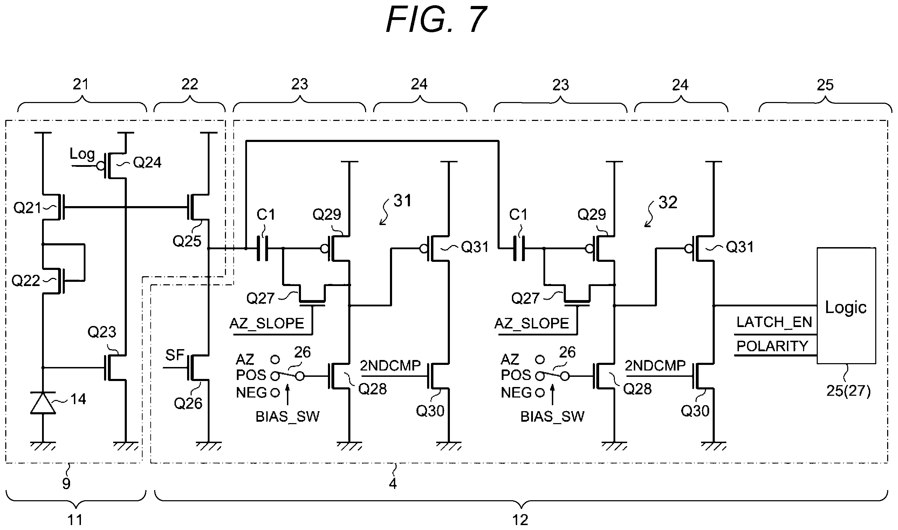

Fig. 7 is a circuit diagram of a modification of the event detection circuit 4 of Fig. 4. The EVS pixel 9 having the similar configuration to that of Fig. 4 is connected to the event detection circuit 4 of Fig. 7. The event detection circuit 4 of Fig. 7 has a first event detecting section 31 that detects an on-event signal and a second event detecting section 32 that detects an off-event signal.

Each of the first event detecting section 31 and the second event detecting section 32 has the same circuit configuration as the event detection circuit 4 in Fig. 4. Therefore, in Fig. 7, transistors in the first event detecting section 31 and the second event detecting section 32 are denoted by the same reference numerals as those of the event detection circuit 4 in Fig. 4.

The voltage signal output from the buffer 22 in the EVS pixel 9 is input to the first event detecting section 31 and the second event detecting section 32. A bias signal for an on-event signal is input to the gate of the transistor Q28 in the differentiation circuit (first differentiator) 23 in the first event detecting section 31. Furthermore, a threshold voltage for the on-event signal is input to the gate of the transistor Q30 in the comparator 24 in the first event detecting section 31. Similarly, a bias signal for an off-event signal is input to the gate of the transistor Q28 in the differentiation circuit (second differentiator) 23 in the second event detecting section 32. Furthermore, a threshold voltage for the off-event signal is input to the gate of the transistor Q30 in the comparator 24 in the second event detecting section 32. The on-event signal detected by the first event detecting section 31 and the off-event signal detected by the second event detecting section 32 are input to the output circuit 25.

The first event detecting section 31 and the second event detecting section 32 operate simultaneously. Thus, in a case where the EVS pixel 9 detects an on-event, the first event detecting section 31 outputs an on-event signal, and in a case where another EVS pixel 9 detects an off-event at the same timing, the second event detecting section 32 outputs an off-event signal.

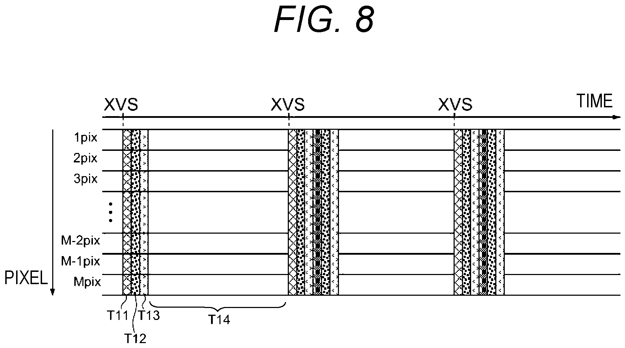

Fig. 8 is a diagram illustrating a drive timing of the photodetection device 1 including the event detection circuit 4 of Fig. 7. In one frame period, first, on-events and off-events of all the EVS pixels 9 in the pixel array unit 2 are simultaneously detected (period T1). Next, a reset operation of all the EVS pixels 9 in the pixel array unit 2 is performed (period T2). Next, on-event signals and off-event signals of all the EVS pixels 9 in the pixel array unit 2 are simultaneously read (period T3). In a case where the EVS pixel 9 detects an on-event, the first event detecting section 31 in the corresponding event detection circuit 4 outputs an on-event signal. In a case where the EVS pixel 9 detects an off-event, the second event detecting section 32 in the corresponding event detection circuit 4 outputs an off-event signal.

In this manner, by providing the first event detecting section 31 for an on-event and the second event detecting section 32 for an off-event in the event detection circuit 4, it is possible to simultaneously detect the on-event and the off-event and simultaneously output an on-event signal and an off-event signal. Therefore, a detection time of the on-event and the off-event can be shortened.

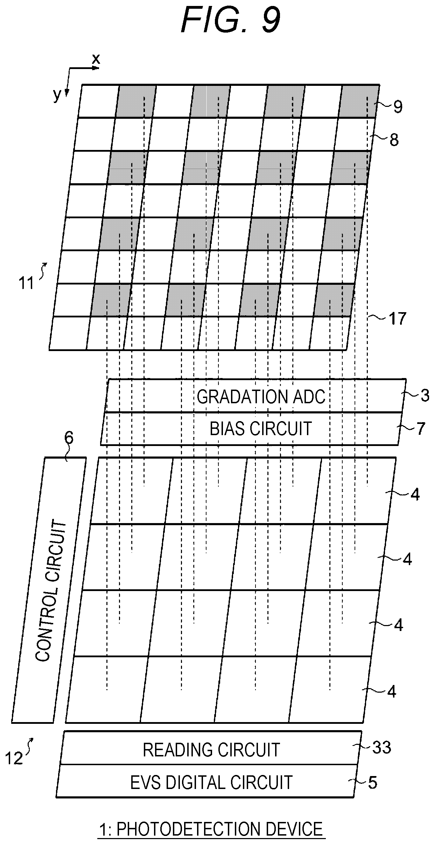

Fig. 9 is a diagram illustrating a chip configuration of a photodetection device 1 according to a comparative example. The photodetection device 1 of Fig. 9 is configured by stacking the upper chip 11 and the lower chip 12. The pixel array unit 2 disposed on the upper chip 11 has one EVS pixel 9 for three gradation pixels 8. In this manner, the pixel array unit 2 of Fig. 9 has more EVS pixels 9 than the pixel array unit 2 of Fig. 2. Therefore, the event detection circuits 4 are disposed in almost all regions on the lower chip 12 facing the pixel array unit 2, and the gradation ADC 3, the reading circuit 33, the EVS digital circuit 5, the control circuit 6, and the bias circuit 7 are provided outside the event detection circuit 4.

The reading circuit 33 that does not exist in Fig. 2 is provided to increase a drive capability of the event signal output from the event detection circuit 4. The event signal output from the reading circuit 33 is input to the EVS digital circuit 5.

The reason why the reading circuit 33 is required in the photodetection device 1 of Fig. 9 is that the event detection circuits 4 are disposed in a large area, and a distance from the event detection circuit 4 to the EVS digital circuit 5 becomes long. In the photodetection device 1 of Fig. 2, since the number of EVS pixels 9 in the pixel array unit 2 is smaller than that in Fig. 9, the event detection circuits 4 can be disposed in a line in the vicinity of the EVS digital circuit 5 of the lower chip 12. Therefore, in the photodetection device 1 of Fig. 9, the distance between the event detection circuit 4 and the EVS digital circuit 5 is shorter than that in Fig. 2, and it is not necessary to increase the drive capability of the event signal by the reading circuit 33. Therefore, in the photodetection device 1 of Fig. 9, since it is not necessary to provide the reading circuit 33 in the lower chip 12, the size of the lower chip 12 can be reduced.

As described above, in the photodetection device 1 of Fig. 9, since the area of the event detection circuits 4 disposed in the lower chip 12 increases and the reading circuit 33 is also required, the size of the lower chip 12 has to be increased, and the photodetection device 1 also increases in size.

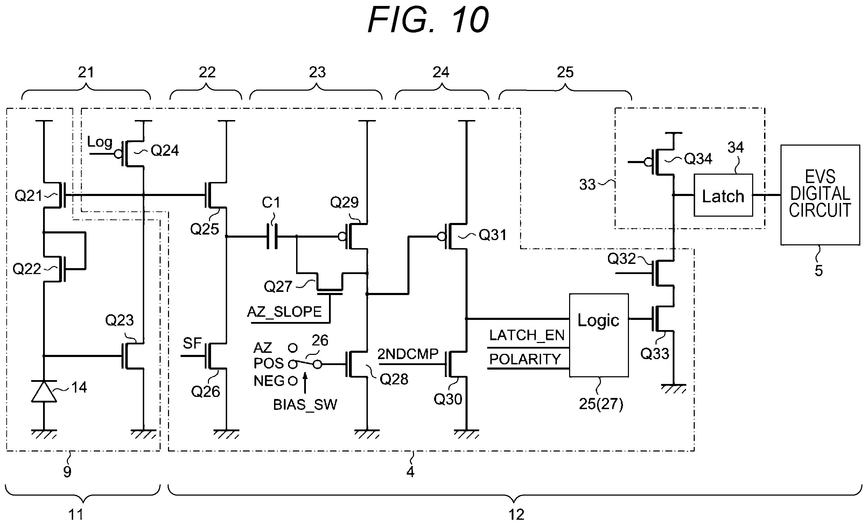

Fig. 10 is a circuit diagram illustrating internal configurations of the EVS pixel 9, the event detection circuit 4, the reading circuit 33, and the EVS digital circuit 5 in Fig. 9.

The EVS pixel 9 in Fig. 10 is configured by a circuit similar to that of the EVS pixel 9 in Fig. 4. In Fig. 4, the transistors Q21 to Q25 in the EVS pixel 9 are disposed on the upper chip 11 and the transistor Q26 is disposed on the lower chip 12, whereas in Fig. 10, the transistors Q21 to Q23 in the EVS pixel 9 are disposed on the upper chip 11 and the transistors Q24 to Q26 are disposed on the lower chip 12.

The event detection circuit 4 in Fig. 10 has the differentiation circuit 23 and the comparator 24 configured by a circuit similar to that of the event detection circuit 4 in Fig. 4. The output circuit 25 provided at a subsequent stage of the comparator 24 is different in a circuit configuration from the output circuit 25 of Fig. 4. The output circuit 25 of Fig. 10 has NMOS transistors Q32 and Q33 as a configuration not present in the output circuit 25 of Fig. 4, in addition to the logic circuit 27 configured similarly to the logic circuit 27 of Fig. 4.

The reading circuit 33 in Fig. 10 has a PMOS transistor Q34 and a latch circuit (latch) 34. A source of the transistor Q34 is connected to a power supply voltage node, and a drain of the transistor Q34 is connected to the latch circuit 34 and a drain of the transistor Q32 in the event detection circuit 4.

The latch circuit 34 latches and outputs a drain voltage of the transistor Q34 according to the event signal output from the event detection circuit 4. An output signal of the latch circuit 34 is input to the EVS digital circuit 5.

As described above, the event detection circuit 4 of Fig. 10 has the transistors Q32 and Q33 in addition to the circuit configuration of the event detection circuit 4 of Fig. 4. Furthermore, the reading circuit 33 is provided between the event detection circuit 4 and the digital circuit in Fig. 10. Therefore, the lower chip 12 in Fig. 10 is larger in size than the lower chip 12 in Figs. 2 and 3, which hinders downsizing of the photodetection device 1.

As described above, in the first embodiment, the number of EVS pixels 9 in the pixel array unit 2 is made smaller than the number of gradation pixels 8, and a plurality of event detection circuits 4 for the plurality of EVS pixels 9 in the pixel array unit 2 is aggregated in the vicinity of the EVS digital circuit 5 in the lower chip 12. Therefore, circuits other than the event detection circuit 4 can be disposed in the region of the lower chip 12 facing the pixel array unit 2 disposed on the upper chip 11. Furthermore, since the event detection circuit 4 is disposed close to the EVS digital circuit 5, it is not necessary to provide the reading circuit 33 between the event detection circuit 4 and the EVS digital circuit 5, so that the size of the lower chip 12 can be further reduced, and the photodetection device 1 can be further reduced in size.

### (Second Embodiment)

The photodetection device 1 according to the first embodiment is a synchronous type that reads an event signal in synchronization with a frame period, whereas a photodetection device 1 according to a second embodiment described below is an asynchronous type.

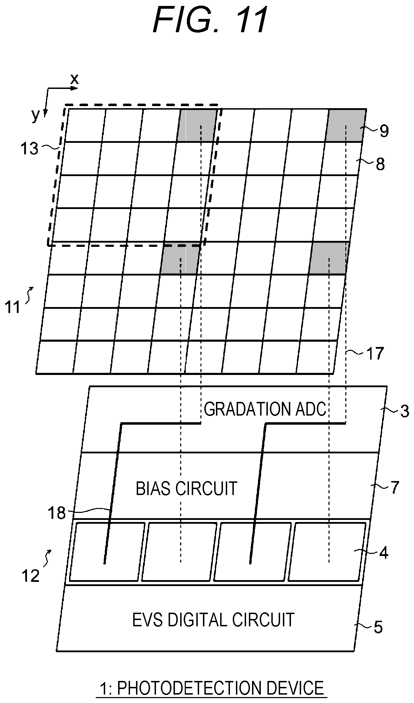

Fig. 11 is a diagram illustrating a chip configuration of the photodetection device 1 according to the second embodiment. The photodetection device 1 of Fig. 11 is configured by stacking the upper chip 11 and the lower chip 12 similarly to the first embodiment. The configuration of the upper chip 11 is similar to that of Fig. 2, and the pixel array unit 2 having the gradation pixels 8 and the EVS pixels 9 is disposed on the upper chip 11. The second embodiment is also common to the first embodiment in that the number of EVS pixels 9 is smaller than the number of gradation pixels 8.

The lower chip 12 in Fig. 11 has the gradation ADC 3, the event detection circuit 4, the EVS digital circuit 5, and the bias circuit 7. The control circuit 6 provided on the lower chip 12 of Fig. 2 is omitted, and the size can be further reduced as compared with the lower chip 12 of Fig. 2.

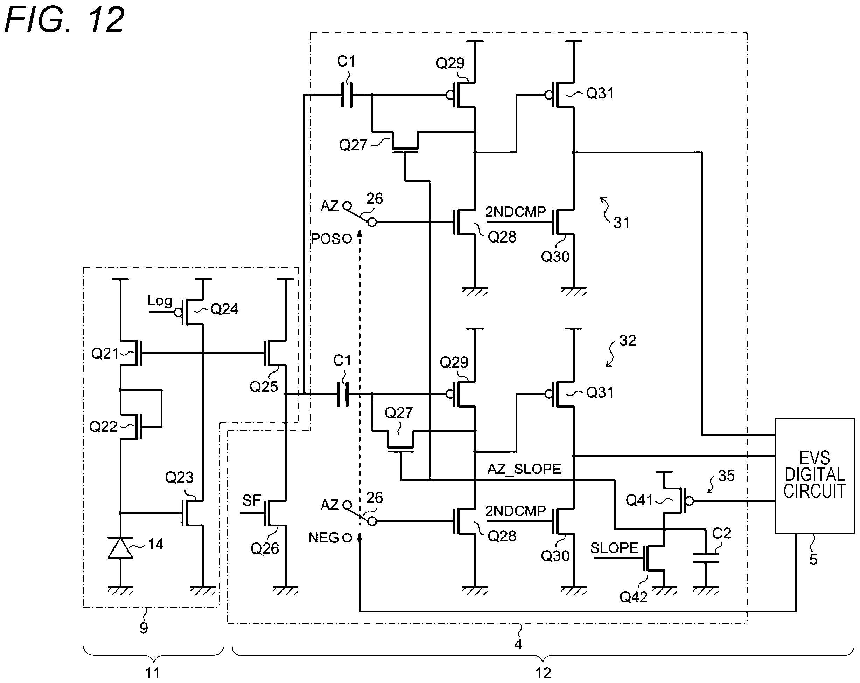

Fig. 12 is a circuit diagram illustrating internal configurations of the EVS pixel 9 and the event detection circuit 4 according to the second embodiment. The internal configuration of the EVS pixel 9 in Fig. 12 is similar to that in Fig. 4.

The event detection circuit 4 of Fig. 12 outputs an event signal indicating that an event has been detected each time the event detection circuit 4 detects an event, regardless of a frame period. More specifically, the event detection circuit 4 in Fig. 12 has the first event detecting section 31, the second event detecting section 32, and a control signal generating section 35.

The circuit configurations of the first event detecting section 31 and the second event detecting section 32 in Fig. 12 are similar to the circuit configurations of the first event detecting section 31 and the second event detecting section 32 in Fig. 7. Therefore, in Fig. 12, the circuit elements configuring the first event detecting section 31 and the second event detecting section 32 in Fig. 7 are denoted by the same reference numerals as those in Fig. 7.

The control signal generating section 35 has a PMOS transistor Q41, an NMOS transistor Q42, and a capacitor C2. The transistors Q41 and Q42 are cascode-connected between a power supply voltage node and a ground voltage node. A first control signal from the EVS digital circuit 5 is input to a gate of the transistor Q41. A control signal SLOPE is input to a gate of the transistor Q42. A control signal AZ_SLOPE similar to that in Fig. 4 is output from a connection node of a drain of the transistor Q41 and a drain of the transistor Q42. The control signal AZ_SLOPE is input to a gate of the transistor Q27 in the first event detecting section 31 and a gate of the transistor Q27 in the second event detecting section 32. The EVS digital circuit 5 outputs a switching control signal BIAS_SW for switching control of the switch 26. The switch 26 switches the gate voltage of the transistor Q28 by the switching control signal BIAS_SW.

As described above, in the photodetection device 1 according to the second embodiment, since the control signal AZ_SLOPE is generated in the event detection circuit 4 and the switching control signal BIAS_SW of the switch 26 is generated in the EVS digital circuit 5, the control circuit 6 of Fig. 4 becomes unnecessary. Therefore, the chip size of the lower chip 12 can be further reduced. Since the photodetection device 1 of Fig. 11 does not include the control circuit 6, it is possible to output an on-event signal and an off-event signal asynchronously with a frame period.

### (Third Embodiment)

As described in the first and second embodiments, the EVS pixel 9 and a part of the event detection circuit 4 included in the photodetection device 1 are disposed on the upper chip 11, and the rest are disposed on the lower chip 12. Among the EVS pixel 9 and the event detection circuit 4, circuits disposed on the upper chip 11 and circuits disposed on the lower chip 12 can be separated not only in one way but also in a plurality of ways.

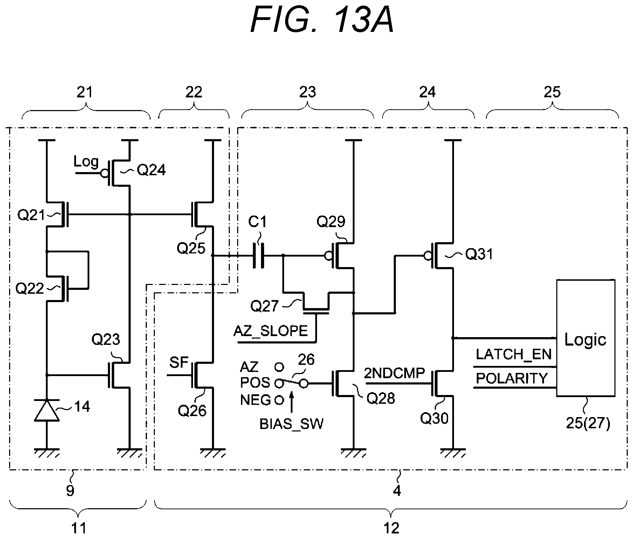

Fig. 13A is a circuit diagram illustrating a first separation between the EVS pixel 9 and the event detection circuit 4. Similarly to Fig. 4, Fig. 13A illustrates an example in which the transistors Q21 to Q25 in the EVS pixel 9 are disposed on the upper chip 11, and the transistor Q26 in the EVS pixel 9 and the event detection circuit 4 are disposed on the lower chip 12. As described above, the EVS pixel 9 has the logarithmic response section 21 and the buffer 22, but in the example of Fig. 13A, the logarithmic response section 21 and a portion of the buffer 22 are disposed on the upper chip 11, and a remaining portion of the buffer 22 is disposed on the lower chip 12. Therefore, the EVS pixel 9 in Fig. 13A is separately disposed on the upper chip 11 and the lower chip 12.

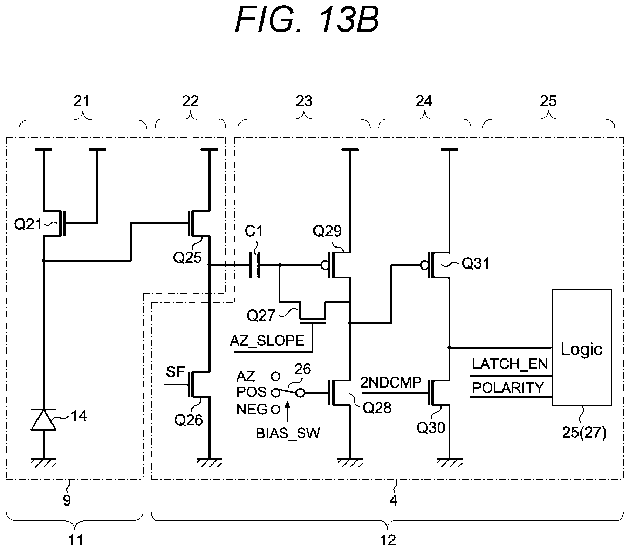

Fig. 13B is a circuit diagram illustrating a second separation between the EVS pixel 9 and the event detection circuit 4. In Fig. 13B, the separation is performed similarly to Fig. 13A, but the circuit configuration of the EVS pixel 9 in Fig. 13B is partially different from the circuit configuration of the EVS pixel 9 in Fig. 13A. In the logarithmic response section 21 in the EVS pixel 9 in Fig. 13B, the transistor Q22 is omitted, and the transistor Q21 is diode-connected. Therefore, the internal configuration of the logarithmic response section 21 can be simplified as compared with Fig. 13A.

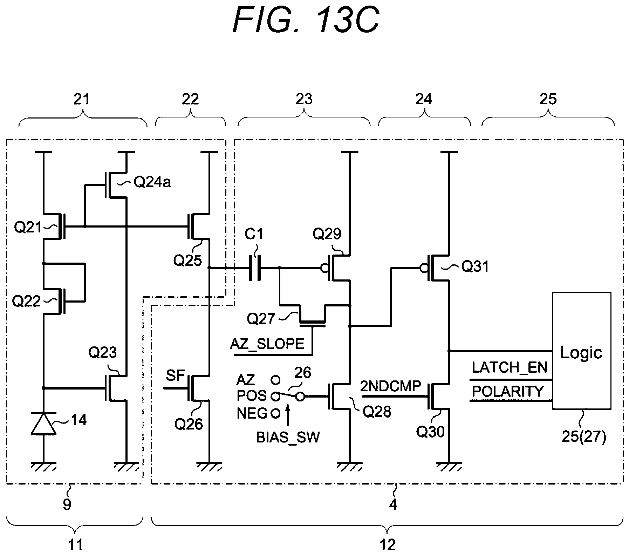

Fig. 13C is a circuit diagram illustrating a third separation between the EVS pixel 9 and the event detection circuit 4. The logarithmic response section 21 in the EVS pixel 9 of Fig. 13C has an NMOS transistor Q24a instead of the PMOS transistor Q24. By replacing the PMOS transistor Q24 with the NMOS transistor Q24a, a bias current can be generated by a leakage current. Furthermore, by providing the NMOS transistor Q24a, all the transistors Q21 to Q25 of the EVS pixel 9 disposed on the upper chip 11 can be unified with the NMOS, and a manufacturing process can be simplified.

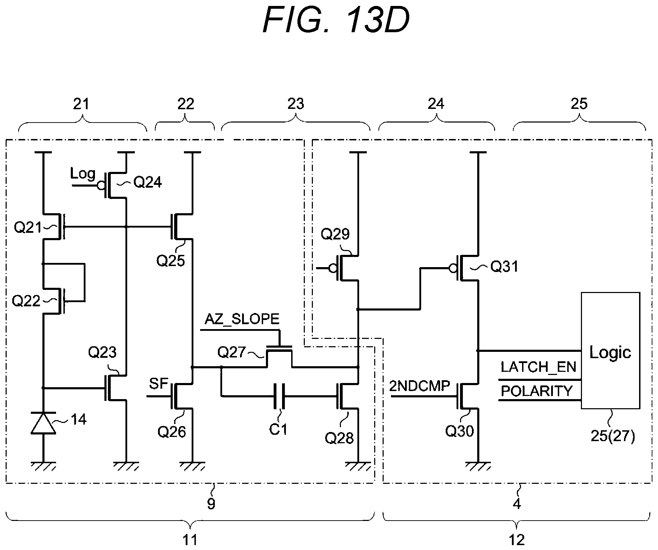

Fig. 13D is a circuit diagram illustrating a fourth separation between the EVS pixel 9 and the event detection circuit 4. In Fig. 13D, not only the EVS pixel 9 but also at least a part of the differentiation circuit 23 in the event detection circuit 4 is disposed on the upper chip 11. Note that up to at least a part of the comparator 24 in the event detection circuit 4 may be disposed on the upper chip 11.

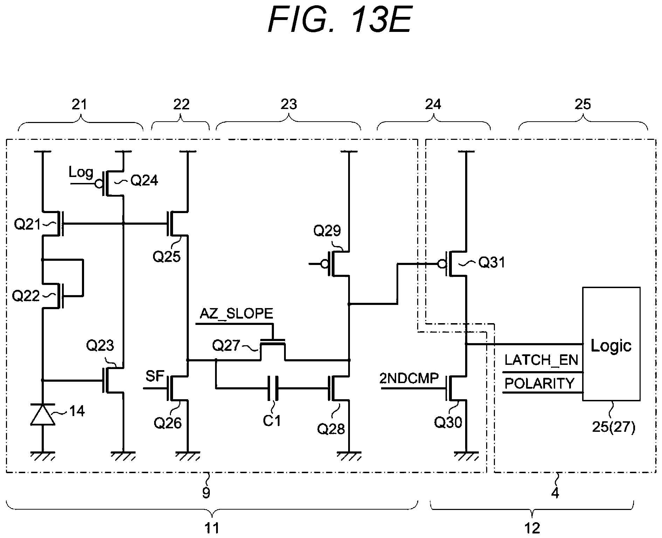

Fig. 13E is a circuit diagram illustrating a fifth separation between the EVS pixel 9 and the event detection circuit 4. Fig. 13E illustrates an example in which up to a part of the comparator 24 is disposed on the upper chip 11. Fig. 13E illustrates an example in which the transistor Q30 in the comparator 24 is disposed on the upper chip 11 and the transistor Q31 is disposed on the lower chip 12, but the transistor Q31 may be disposed on the upper chip 11 and the transistor Q30 may be disposed on the lower chip 12.

Figs. 13A, 13B, 13C, and 13D illustrate examples in which a set of differentiation circuit 23 and comparator 24 are provided in the event detection circuit 4. However, even in a case where a plurality of sets of differentiation circuit 23 and comparator 24 are provided in the event detection circuit 4, it is conceivable to arbitrarily separate the circuits disposed on the upper chip 11 and the lower chip 12.

Fig. 7 described above is a diagram illustrating an example of how to separate the upper chip 11 and the lower chip 12 in a case where the first event detecting section 31 and the second event detecting section 32 are provided in the event detection circuit 4. Fig. 7 illustrates an example in which the transistors Q21 to Q25 in the EVS pixel 9 are disposed on the upper chip 11, and the transistor Q26 in the EVS pixel 9 and the entire event detection circuit 4 are disposed on the lower chip 12.

In the photodetection device 1 described above, an example in which the EVS pixel 9 and the event detection circuit 4 correspond to each other on a one-to-one basis has been described, but a configuration in which one event detection circuit 4 is shared by a plurality of EVS pixels 9 can also be adopted.

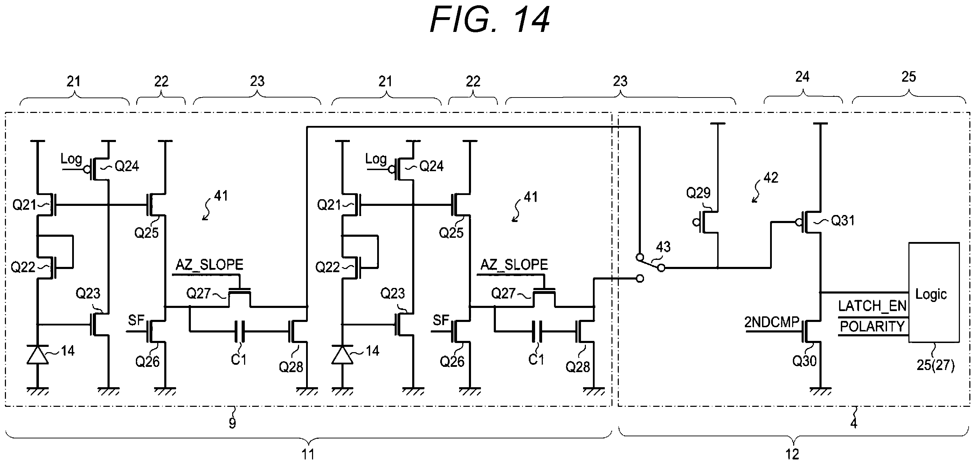

Fig. 14 is a circuit diagram illustrating an example in which at least a part of the event detection circuit 4 is shared by a plurality of EVS pixels 9. Fig. 14 has a plurality of individual pixel units 41 including the EVS pixel 9 and a first portion of the event detection circuit 4, and a sharing section 42 including a remaining second portion excluding the first portion of the event detection circuit 4. The plurality of individual pixel units 41 is disposed on the upper chip 11, and the sharing section 42 is disposed on the lower chip 12.

Each of the plurality of individual pixel units 41 has transistors Q21 to Q26 in the EVS pixel 9, and transistors Q27 and Q28 and a capacitor C3 in the event detection circuit 4. The sharing section 42 has transistors Q29 to Q31 and a switch 43. The switch 43 performs switching control on the plurality of individual pixel units 41 to connect any one of the individual pixel units 41 to the sharing section 42.

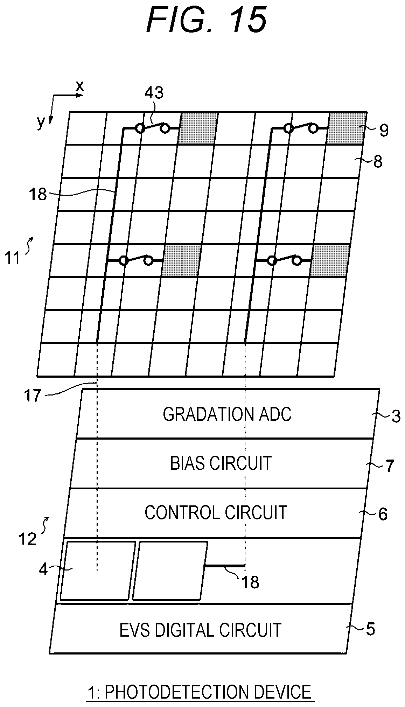

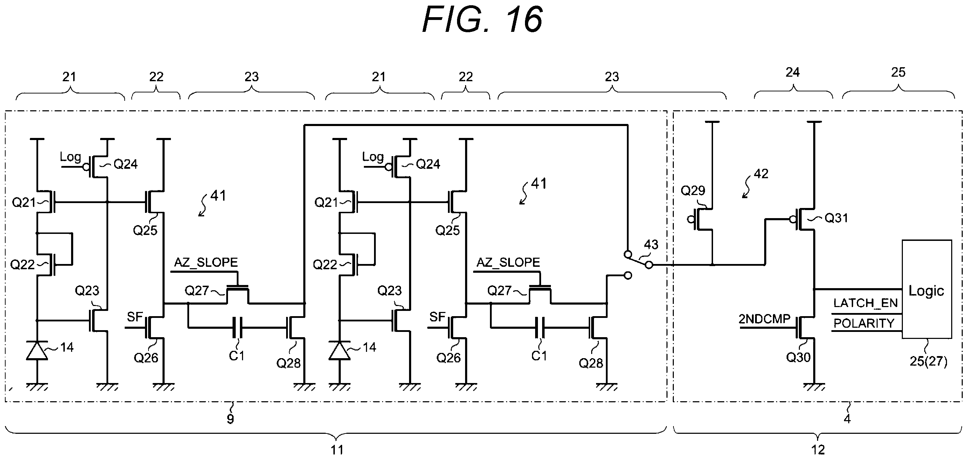

Although Fig. 14 illustrates an example in which the switch 43 is provided on the lower chip 12, the switch 43 may be disposed on the upper chip 11 as illustrated in Fig. 15. Fig. 16 is a circuit diagram corresponding to Fig. 15.

As illustrated in Fig. 14, since the sharing section 42 which is a portion of the event detection circuit 4 is provided on the lower chip 12 and the sharing section 42 is shared by the plurality of individual pixel units 41 disposed on the upper chip 11, circuits (for example, the gradation ADC 3, the EVS digital circuit 5, the control circuit 6, the bias circuit 7, and the like) other than the sharing section 42 can be disposed in a region on the lower chip 12 facing the individual pixel units 41, and the chip size of the lower chip 12 can be reduced.

As described above, in the third embodiment, since the EVS pixels 9 and the event detection circuits 4 can be arbitrarily separated and disposed on the upper chip 11 and the lower chip 12, the circuit areas of the upper chip 11 and the lower chip 12 can be optimized, and the entire information processing device can be downsized. Furthermore, in some cases, it is also possible to configure the information processing device by stacking three or more chips.

### (Fourth Embodiment)

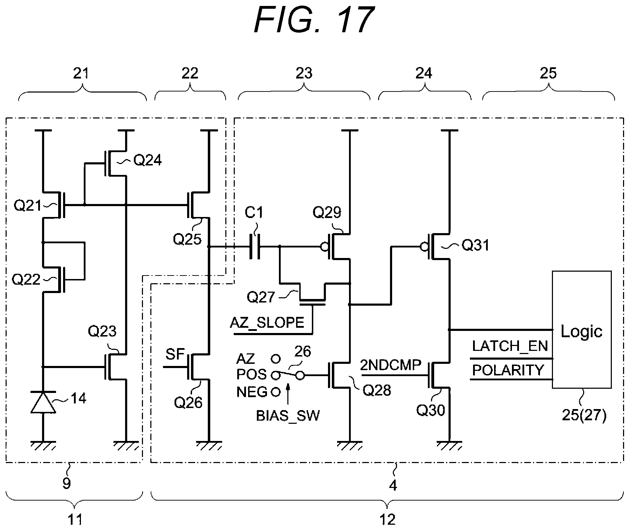

The photodetection device 1 according to the first to third embodiments is configured by being divided into the upper chip 11 and the lower chip 12. As described above, a method of dividing circuits in the photodetection device 1 into the upper chip 11 and the lower chip 12 is arbitrary. For example, Fig. 17 illustrates an example in which the EVS pixel 9 and the transistor Q25 in the event detection circuit 4 are disposed on the upper chip 11 and the other circuit portions are disposed on the lower chip 12.

Furthermore, the photodetection device 1 having a stacked structure of three or more layers may be manufactured by stacking one or more intermediate chips 13 between the upper chip 11 and the lower chip 12.

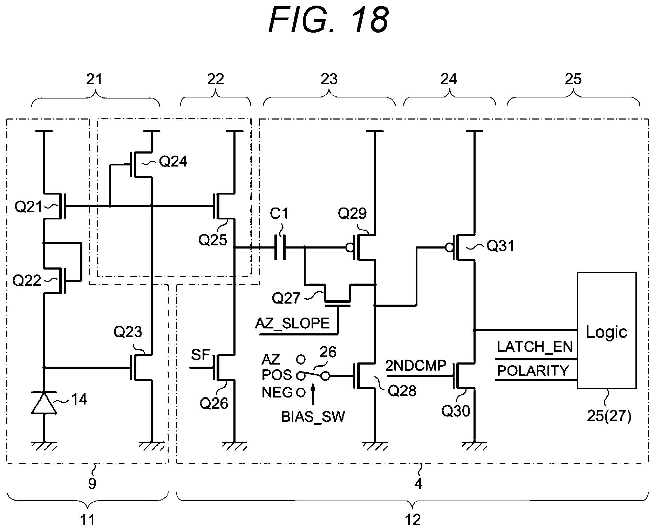

Fig. 18 is a circuit diagram illustrating an example of the photodetection device 1 having a three-layer structure. In Fig. 18, the photoelectric conversion element 14 and the transistors Q21 to Q23 are disposed on the upper chip 11, the transistors Q24 and Q25 are disposed on an intermediate chip 10, and the remaining circuit portion of the event detection circuit 4 and the output circuit 25 are disposed on the lower chip 12. In a case where the photodetection device 1 has a stacked structure of three or more layers, the respective chips are connected by Cu-Cu bonding, vias, or bumps, but it is desirable to dispose the respective circuit elements such that the wiring pattern in each chip is as short as possible.

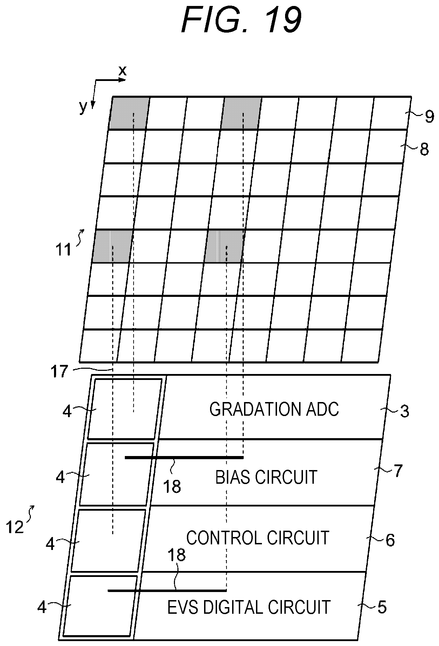

Although the example in which the plurality of event detection circuits 4 is disposed along the row direction x is illustrated in Fig. 2 described above, the plurality of event detection circuits 4 may be disposed in the column direction as illustrated in Fig. 19. By collectively disposing the plurality of event detection circuits 4 in a partial region on the lower chip 12, the other regions can be effectively used for disposing other circuits, and the size of the lower chip 12 can be reduced.

### (Application Example)

The technology according to the present disclosure can be applied to various products. For example, the technology according to the present disclosure may also be implemented as a device mounted on any type of mobile body such as an automobile, an electric automobile, a hybrid electric automobile, an automatic two-wheeled vehicle, a bicycle, a personal mobility, an airplane, a drone, a ship, a robot, a construction machine, an agricultural machine (tractor), or the like.

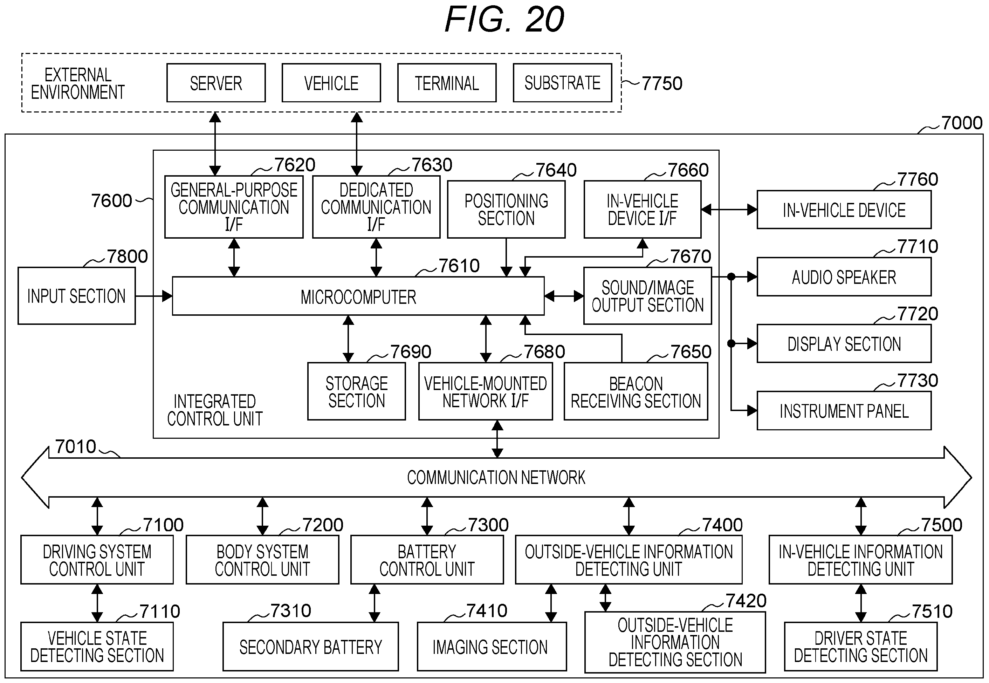

Fig. 20 is a block diagram illustrating a schematic configuration example of a vehicle control system 7000 as an example of a mobile body control system to which the technology of the present disclosure is applied. The vehicle control system 7000 includes a plurality of electronic control units connected to each other via a communication network 7010. In the example illustrated in Fig. 20, the vehicle control system 7000 includes a driving system control unit 7100, a body system control unit 7200, a battery control unit 7300, an outside-vehicle information detecting unit 7400, an in-vehicle information detecting unit 7500, and an integrated control unit 7600. The communication network 7010 connecting the plurality of control units to each other may, for example, be a vehicle-mounted communication network compliant with an arbitrary standard such as controller area network (CAN), local interconnect network (LIN), local area network (LAN), FlexRay (registered trademark), or the like.

Each of the control units includes: a microcomputer that performs arithmetic processing according to various kinds of programs; a storage section that stores the programs executed by the microcomputer, parameters used for various kinds of operations, or the like; and a driving circuit that drives various kinds of control target devices. Each of the control units further includes: a network interface (I/F) for performing communication with other control units via the communication network 7010; and a communication I/F for performing communication with a device, a sensor, or the like within and without the vehicle by wire communication or radio communication. In Fig. 20, a microcomputer 7610, a general-purpose communication I/F 7620, a dedicated communication I/F 7630, a positioning section 7640, a beacon receiving section 7650, an in-vehicle device I/F 7660, a sound/image output section 7670, a vehicle-mounted network I/F 7680, and a storage section 7690 are illustrated as a functional configuration of the integrated control unit 7600. The other control units similarly include a microcomputer, a communication I/F, a storage section, and the like.

The driving system control unit 7100 controls the operation of devices related to the driving system of the vehicle in accordance with various kinds of programs. For example, the driving system control unit 7100 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like. The driving system control unit 7100 may have a function as a control device of an antilock brake system (ABS), electronic stability control (ESC), or the like.

The driving system control unit 7100 is connected with a vehicle state detecting section 7110. The vehicle state detecting section 7110, for example, includes at least one of a gyro sensor that detects the angular velocity of axial rotational movement of a vehicle body, an acceleration sensor that detects the acceleration of the vehicle, and sensors for detecting an amount of operation of an accelerator pedal, an amount of operation of a brake pedal, the steering angle of a steering wheel, an engine speed or the rotational speed of wheels, and the like. The driving system control unit 7100 performs arithmetic processing using a signal input from the vehicle state detecting section 7110, and controls the internal combustion engine, the driving motor, an electric power steering device, the brake device, and the like.

The body system control unit 7200 controls the operation of various kinds of devices provided to the vehicle body in accordance with various kinds of programs. For example, the body system control unit 7200 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 7200. The body system control unit 7200 receives these input radio waves or signals, and controls a door lock device, the power window device, the lamps, or the like of the vehicle.

The battery control unit 7300 controls a secondary battery 7310, which is a power supply source for the driving motor, in accordance with various kinds of programs. For example, the battery control unit 7300 is supplied with information about a battery temperature, a battery output voltage, an amount of charge remaining in the battery, or the like from a battery device including the secondary battery 7310. The battery control unit 7300 performs arithmetic processing using these signals, and performs control for regulating the temperature of the secondary battery 7310 or controls a cooling device provided to the battery device or the like.

The outside-vehicle information detecting unit 7400 detects information about the outside of the vehicle including the vehicle control system 7000. For example, the outside-vehicle information detecting unit 7400 is connected with at least one of an imaging section 7410 and an outside-vehicle information detecting section 7420. The imaging section 7410 includes at least one of a time-of-flight (ToF) camera, a stereo camera, a monocular camera, an infrared camera, and other cameras. The outside-vehicle information detecting section 7420, for example, includes at least one of an environmental sensor for detecting current atmospheric conditions or weather conditions and a peripheral information detecting sensor for detecting another vehicle, an obstacle, a pedestrian, or the like on the periphery of the vehicle including the vehicle control system 7000.

The environmental sensor, for example, may be at least one of a rain drop sensor detecting rain, a fog sensor detecting a fog, a sunshine sensor detecting a degree of sunshine, and a snow sensor detecting a snowfall. The peripheral information detecting sensor may be at least one of an ultrasonic sensor, a radar device, and a LIDAR device (Light detection and Ranging device, or Laser imaging detection and ranging device). Each of the imaging section 7410 and the outside-vehicle information detecting section 7420 may be provided as an independent sensor or device, or may be provided as a device in which a plurality of sensors or devices are integrated.

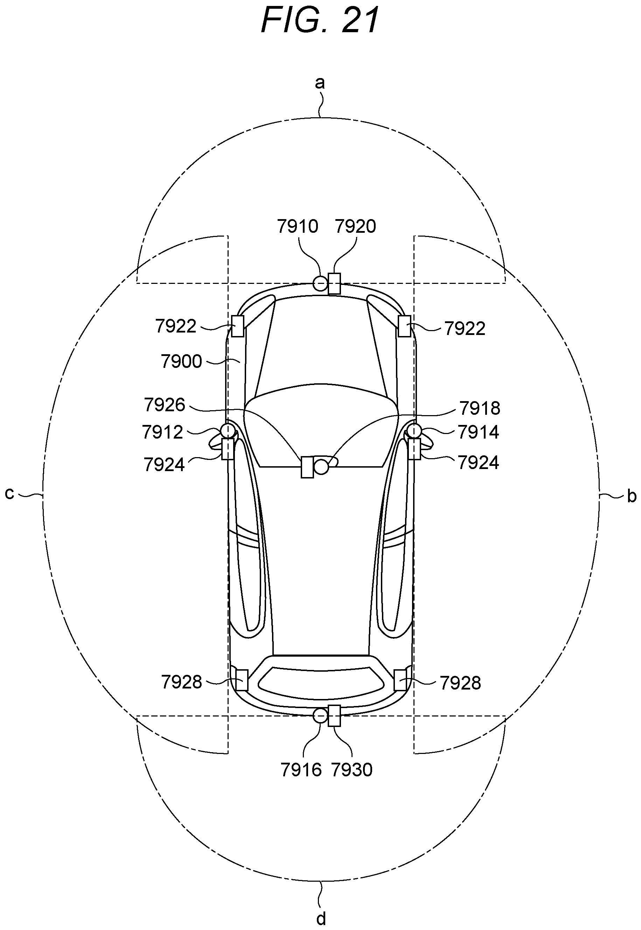

Here, Fig. 21 illustrates an example of installation positions of the imaging section 7410 and the outside-vehicle information detecting section 7420. Imaging sections 7910, 7912, 7914, 7916, and 7918 are, for example, disposed at at least one of positions on a front nose, sideview mirrors, a rear bumper, and a back door of the vehicle 7900 and a position on an upper portion of a windshield within the interior of the vehicle. The imaging section 7910 provided to the front nose and the imaging section 7918 provided to the upper portion of the windshield within the interior of the vehicle obtain mainly an image of the front of the vehicle 7900. The imaging sections 7912 and 7914 provided to the sideview mirrors obtain mainly an image of the sides of the vehicle 7900. The imaging section 7916 provided to the rear bumper or the back door obtains mainly an image of the rear of the vehicle 7900. The imaging section 7918 provided to the upper portion of the windshield within the interior of the vehicle is used mainly to detect a preceding vehicle, a pedestrian, an obstacle, a signal, a traffic sign, a lane, or the like.

Note that Fig. 21 illustrates an example of the imaging range of each of the imaging sections 7910, 7912, 7914, and 7916. An imaging range a represents the imaging range of the imaging section 7910 provided to the front nose. Imaging ranges b and c respectively represent the imaging ranges of the imaging sections 7912 and 7914 provided to the sideview mirrors. An imaging range d represents the imaging range of the imaging section 7916 provided to the rear bumper or the back door. A bird's-eye image of the vehicle 7900 as viewed from above can be obtained by superimposing image data imaged by the imaging sections 7910, 7912, 7914, and 7916, for example.

Outside-vehicle information detecting sections 7920, 7922, 7924, 7926, 7928, and 7930 provided to the front, rear, sides, and corners of the vehicle 7900 and the upper portion of the windshield within the interior of the vehicle may be, for example, an ultrasonic sensor or a radar device. The outside-vehicle information detecting sections 7920, 7926, and 7930 provided to the front nose of the vehicle 7900, the rear bumper, the back door of the vehicle 7900, and the upper portion of the windshield within the interior of the vehicle may be a LIDAR device, for example. These outside-vehicle information detecting sections 7920 to 7930 are used mainly to detect a preceding vehicle, a pedestrian, an obstacle, or the like.

Referring back to Fig. 20, the description will be continued. The outside-vehicle information detecting unit 7400 makes the imaging section 7410 image an image of the outside of the vehicle, and receives imaged image data. In addition, the outside-vehicle information detecting unit 7400 receives detection information from the outside-vehicle information detecting section 7420 connected to the outside-vehicle information detecting unit 7400. In a case where the outside-vehicle information detecting section 7420 is an ultrasonic sensor, a radar device, or a LIDAR device, the outside-vehicle information detecting unit 7400 transmits an ultrasonic wave, an electromagnetic wave, or the like, and receives information of a received reflected wave. On the basis of the received information, the outside-vehicle information detecting unit 7400 may perform processing of detecting an object such as a human, a vehicle, an obstacle, a sign, a character on a road surface, or the like, or processing of detecting a distance thereto. The outside-vehicle information detecting unit 7400 may perform environment recognition processing of recognizing a rainfall, a fog, road surface conditions, or the like on the basis of the received information. The outside-vehicle information detecting unit 7400 may calculate a distance to an object outside the vehicle on the basis of the received information.

In addition, on the basis of the received image data, the outside-vehicle information detecting unit 7400 may perform image recognition processing of recognizing a human, a vehicle, an obstacle, a sign, a character on a road surface, or the like, or processing of detecting a distance thereto. The outside-vehicle information detecting unit 7400 may subject the received image data to processing such as distortion correction, alignment, or the like, and combine the image data imaged by a plurality of different imaging sections 7410 to generate a bird's-eye image or a panoramic image. The outside-vehicle information detecting unit 7400 may perform viewpoint conversion processing using the image data imaged by the imaging section 7410 including the different imaging parts.

The in-vehicle information detecting unit 7500 detects information about the inside of the vehicle. The in-vehicle information detecting unit 7500 is, for example, connected with a driver state detecting section 7510 that detects the state of a driver. The driver state detecting section 7510 may include a camera that images the driver, a biosensor that detects biological information of the driver, a microphone that collects sound within the interior of the vehicle, or the like. The biosensor is, for example, disposed in a seat surface, the steering wheel, or the like, and detects biological information of an occupant sitting in a seat or the driver holding the steering wheel. On the basis of detection information input from the driver state detecting section 7510, the in-vehicle information detecting unit 7500 may calculate a degree of fatigue of the driver or a degree of concentration of the driver, or may determine whether the driver is dozing. The in-vehicle information detecting unit 7500 may subject an audio signal obtained by the collection of the sound to processing such as noise canceling processing or the like.

The integrated control unit 7600 controls general operation within the vehicle control system 7000 in accordance with various kinds of programs. The integrated control unit 7600 is connected with an input section 7800. The input section 7800 is implemented by a device capable of input operation by an occupant, such, for example, as a touch panel, a button, a microphone, a switch, a lever, or the like. The integrated control unit 7600 may be supplied with data obtained by voice recognition of voice input through the microphone. The input section 7800 may, for example, be a remote control device using infrared rays or other radio waves, or an external connecting device such as a mobile telephone, a personal digital assistant (PDA), or the like that supports operation of the vehicle control system 7000. The input section 7800 may be, for example, a camera. In that case, an occupant can input information by gesture. Alternatively, data may be input which is obtained by detecting the movement of a wearable device that an occupant wears. Further, the input section 7800 may, for example, include an input control circuit or the like that generates an input signal on the basis of information input by an occupant or the like using the above-described input section 7800, and which outputs the generated input signal to the integrated control unit 7600. An occupant or the like inputs various kinds of data or gives an instruction for processing operation to the vehicle control system 7000 by operating the input section 7800.

The storage section 7690 may include a read only memory (ROM) that stores various kinds of programs executed by the microcomputer and a random access memory (RAM) that stores various kinds of parameters, operation results, sensor values, or the like. In addition, the storage section 7690 may be implemented by a magnetic storage device such as a hard disc drive (HDD) or the like, a semiconductor storage device, an optical storage device, a magnetooptical storage device, or the like.

The general-purpose communication I/F 7620 is a communication I/F used widely, which communication I/F mediates communication with various apparatuses present in an external environment 7750. The general-purpose communication I/F 7620 may implement a cellular communication protocol such as global system for mobile communications (GSM (registered trademark)), worldwide interoperability for microwave access (WiMAX (registered trademark)), long term evolution (LTE (registered trademark)), LTE-advanced (LTE-A), or the like, or another wireless communication protocol such as wireless LAN (referred to also as wireless fidelity (Wi-Fi (registered trademark)), Bluetooth (registered trademark), or the like. The general-purpose communication I/F 7620 may, for example, connect to an apparatus (for example, an application server or a control server) present on an external network (for example, the Internet, a cloud network, or a company-specific network) via a base station or an access point. In addition, the general-purpose communication I/F 7620 may connect to a terminal present in the vicinity of the vehicle (which terminal is, for example, a terminal of the driver, a pedestrian, or a store, or a machine type communication (MTC) terminal) using a peer to peer (P2P) technology, for example.

The dedicated communication I/F 7630 is a communication I/F that supports a communication protocol developed for use in vehicles. The dedicated communication I/F 7630 may implement a standard protocol such, for example, as wireless access in vehicle environment (WAVE), which is a combination of institute of electrical and electronic engineers (IEEE) 802.11p as a lower layer and IEEE 1609 as a higher layer, dedicated short range communications (DSRC), or a cellular communication protocol. The dedicated communication I/F 7630 typically carries out V2X communication as a concept including one or more of communication between a vehicle and a vehicle (Vehicle to Vehicle), communication between a road and a vehicle (Vehicle to Infrastructure), communication between a vehicle and a home (Vehicle to Home), and communication between a pedestrian and a vehicle (Vehicle to Pedestrian).

The positioning section 7640, for example, performs positioning by receiving a global navigation satellite system (GNSS) signal from a GNSS satellite (for example, a GPS signal from a global positioning system (GPS) satellite), and generates positional information including the latitude, longitude, and altitude of the vehicle. Incidentally, the positioning section 7640 may identify a current position by exchanging signals with a wireless access point, or may obtain the positional information from a terminal such as a mobile telephone, a personal handyphone system (PHS), or a smart phone that has a positioning function.

The beacon receiving section 7650, for example, receives a radio wave or an electromagnetic wave transmitted from a radio station installed on a road or the like, and thereby obtains information about the current position, congestion, a closed road, a necessary time, or the like. Incidentally, the function of the beacon receiving section 7650 may be included in the dedicated communication I/F 7630 described above.

The in-vehicle device I/F 7660 is a communication interface that mediates connection between the microcomputer 7610 and various in-vehicle devices 7760 present within the vehicle. The in-vehicle device I/F 7660 may establish wireless connection using a wireless communication protocol such as wireless LAN, Bluetooth (registered trademark), near field communication (NFC), or wireless universal serial bus (WUSB). In addition, the in-vehicle device I/F 7660 may establish wired connection by universal serial bus (USB), high-definition multimedia interface (HDMI (registered trademark)), mobile high-definition link (MHL), or the like via a connection terminal (and a cable if necessary) not depicted in the figures. The in-vehicle devices 7760 may, for example, include at least one of a mobile device and a wearable device possessed by an occupant and an information device carried into or attached to the vehicle. The in-vehicle devices 7760 may also include a navigation device that searches for a path to an arbitrary destination. The in-vehicle device I/F 7660 exchanges control signals or data signals with these in-vehicle devices 7760.

The vehicle-mounted network I/F 7680 is an interface that mediates communication between the microcomputer 7610 and the communication network 7010. The vehicle-mounted network I/F 7680 transmits and receives signals or the like in conformity with a predetermined protocol supported by the communication network 7010.

The microcomputer 7610 of the integrated control unit 7600 controls the vehicle control system 7000 in accordance with various kinds of programs on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. For example, the microcomputer 7610 may calculate a control target value for the driving force generating device, the steering mechanism, or the braking device on the basis of the obtained information about the inside and outside of the vehicle, and output a control command to the driving system control unit 7100. For example, the microcomputer 7610 may perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like. In addition, the microcomputer 7610 may perform cooperative control intended for automated driving, which makes the vehicle to travel automatedly without depending on the operation of the driver, or the like, by controlling the driving force generating device, the steering mechanism, the braking device, or the like on the basis of the obtained information about the surroundings of the vehicle.

The microcomputer 7610 may generate three-dimensional distance information between the vehicle and an object such as a surrounding structure, a person, or the like, and generate local map information including information about the surroundings of the current position of the vehicle, on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. In addition, the microcomputer 7610 may predict danger such as collision of the vehicle, approaching of a pedestrian or the like, an entry to a closed road, or the like on the basis of the obtained information, and generate a warning signal. The warning signal may, for example, be a signal for producing a warning sound or lighting a warning lamp.

The sound/image output section 7670 transmits an output signal of at least one of a sound and an image to an output device capable of visually or auditorily notifying information to an occupant of the vehicle or the outside of the vehicle. In the example of Fig. 20, an audio speaker 7710, a display section 7720, and an instrument panel 7730 are illustrated as the output device. The display section 7720 may, for example, include at least one of an on-board display and a head-up display. The display section 7720 may have an augmented reality (AR) display function. The output device may be other than these devices, and may be another device such as headphones, a wearable device such as an eyeglass type display worn by an occupant or the like, a projector, a lamp, or the like. In a case where the output device is a display device, the display device visually displays results obtained by various kinds of processing performed by the microcomputer 7610 or information received from another control unit in various forms such as text, an image, a table, a graph, or the like. In addition, in a case where the output device is an audio output device, the audio output device converts an audio signal constituted of reproduced audio data or sound data or the like into an analog signal, and auditorily outputs the analog signal.

Note that, in the example illustrated in Fig. 20, at least two control units connected through the communication network 7010 may be integrated as one control unit. Alternatively, each individual control unit may include a plurality of control units. Further, the vehicle control system 7000 may include another control unit not depicted in the figures. In addition, part or the whole of the functions performed by one of the control units in the above description may be assigned to another control unit. That is, predetermined arithmetic processing may be performed by any of the control units as long as information is transmitted and received via the communication network 7010. Similarly, a sensor or a device connected to one of the control units may be connected to another control unit, and a plurality of control units may mutually transmit and receive detection information via the communication network 7010.

Note that the present technology may have the following configurations.
(1) A photodetection device including:
   a first substrate and a second substrate stacked on each other,
   in which the first substrate has a pixel group including a first pixel that generates a pixel signal according to a light amount of incident light and a second pixel that detects a luminance change of the incident light,
   the second substrate has an event detection circuit that detects an event based on the luminance change of the second pixel, and
   at least a part of the event detection circuit is disposed in a region other than a region of a same size facing the pixel group on the second substrate.
(2) The photodetection device according to (1),
   in which the first substrate has a plurality of the pixel groups including a plurality of the first pixels and a plurality of the second pixels,
   the second substrate has a plurality of the event detection circuits disposed adjacent to each other, and
   at least a part of the plurality of event detection circuits are disposed in a region other than a region of a same size facing the plurality of pixel groups on the second substrate.
(3) The photodetection device according to (2),
   in which the first substrate has a pixel array unit including the plurality of pixel groups, and
   the event detection circuit is disposed in a region of a same size facing the pixel array unit on the second substrate.
(4) The photodetection device according to (2) or (3), in which the event detection circuit outputs a signal indicating whether or not each of the plurality of second pixels has detected the event in synchronization with a predetermined frame period.
(5) The photodetection device according to any one of (1) to (3), in which the event detection circuit has a first differentiator and a second differentiator that respectively time-differentiate electric signals photoelectrically converted by two of the second pixels having different directions of the luminance change.
(6) The photodetection device according to (5), in which the event detection circuit outputs an event signal indicating that the event has been detected each time the event detection circuit detects the event, regardless of a frame period.
(7) The photodetection device according to any one of (1) to (6), in which at least a part of the second pixels are disposed on the second substrate.
(8) The photodetection device according to (7),
   in which the second pixel has:
   a photoelectric conversion element;
   a charge-voltage conversion unit that generates a voltage signal obtained by logarithmic conversion of a charge photoelectrically converted by the photoelectric conversion element; and
   a buffer circuit that buffers the voltage signal,
   the photoelectric conversion element, the charge-voltage conversion unit, and a portion of the buffer circuit are disposed on the first substrate, and
   a portion other than the portion of the buffer circuit is disposed on the second substrate.
(9) The photodetection device according to any one of (1) to (7),
   in which the second pixel has:
   a photoelectric conversion element; and
   a charge-voltage conversion unit that converts a charge photoelectrically converted by the second pixel into a voltage signal subjected to logarithmic conversion, and
   the charge-voltage conversion unit has a diode connected between a cathode of the photoelectric conversion element and a power supply voltage node.
(10) The photodetection device according to any one of (1) to (7),
   in which the second pixel has:
   a photoelectric conversion element; and
   a charge-voltage conversion unit that converts a charge photoelectrically converted by the second pixel into a voltage signal subjected to logarithmic conversion, and
   the charge-voltage conversion unit has:
      an amplifier connected to a cathode of the photoelectric conversion element; and
      a bias circuit that supplies a bias current to the amplifier.
(11) The photodetection device according to (10), in which the voltage conversion unit has a plurality of transistors of a same conductivity type, including the bias circuit.
(12) The photodetection device according to (10),
   in which a plurality of transistors of a first conductivity type is included other than the bias circuit in the voltage conversion unit, and
   the bias circuit has a transistor of a second conductivity type.
(13) The photodetection device according to any one of (1) to (12), in which the event detection circuit has a first circuit portion disposed on the first substrate and a second circuit portion disposed on the second substrate.
(14) The photodetection device according to (13),
   in which the event detection circuit has:
   a differentiator that time-differentiates a voltage signal output from the second pixel;
   a source follower circuit that is connected to an output node of the differentiator; and
   a comparator that is connected to an output node of the source follower circuit and detects the event on the basis of a result of comparing an output signal of the source follower circuit with a predetermined reference signal,
   the first circuit portion has the differentiator and the source follower circuit, and
   the second circuit portion has the comparator.
(15) The photodetection device according to (13),
   in which the event detection circuit has:
   a differentiator that time-differentiates a voltage signal output from the second pixel;
   a source follower circuit that is connected to an output node of the differentiator; and
   a comparator that is connected to an output node of the source follower circuit and detects the event on the basis of a result of comparing an output signal of the source follower circuit with a predetermined reference signal,
   the first circuit portion has the differentiator, the source follower circuit, and a portion of the comparator, and
   the second circuit portion has a portion other than the portion of the comparator.
(16) The photodetection device according to any one of (13) to (15), in which two or more of the first circuit portions connected to two or more of the second pixels share one of the second circuit portions.
(17) The photodetection device according to (16), further including:
   a switch that is connected to output nodes of the two or more first circuit portions,
   in which the switch connects any one output node of the two or more first circuit portions to an input node of the second circuit portion.
(18) The photodetection device according to (17), in which the switch is disposed on the first substrate or the second substrate.
(19) The photodetection device according to any one of (3) to (15),
   in which the event detection circuit is provided for each of the plurality of second pixels, and
   a plurality of the event detection circuits is disposed close to each other in a partial region on the second substrate.
(20) An electronic apparatus including:
   a photodetection device; and
   a signal processing section that performs signal processing on the basis of a pixel signal and an event signal output from the photodetection device,
   in which the photodetection device includes:
      a first substrate and a second substrate stacked on each other,
      the first substrate has a pixel group including a first pixel that generates the pixel signal according to a light amount of incident light and a second pixel that detects a luminance change of the incident light,
      the second substrate has an event detection circuit that detects an event based on the luminance change of the second pixel, and
      at least a part of the event detection circuit is disposed in a region other than a region of a same size facing the pixel group on the second substrate.

Aspects of the present disclosure are not limited to the above-described individual embodiments, but include various modifications that can be conceived by those skilled in the art, and the effects of the present disclosure are not limited to the above-described contents. That is, various additions, modifications, and partial deletions are possible without departing from the conceptual idea and spirit of the present disclosure derived from the matters defined in the claims and equivalents thereof.

### REFERENCE SIGNS LIST

- 1: Photodetection device
- 2: Pixel array unit
- 4: Event detection circuit
- 5: EVS digital circuit
- 6: Control circuit
- 7: Bias circuit
- 8: Gradation pixel
- 9: EVS pixel
- 11: Upper chip
- 12: Lower chip
- 13: Pixel group
- 14: Photoelectric conversion element
- 15: Pixel circuit
- 17: Wiring path
- 18: Wiring pattern
- 21: Logarithmic response section
- 22: Buffer
- 23: Differentiation circuit
- 24: Comparator
- 25: Output circuit
- 26: Switch
- 27: Logic circuit
- 31: First event detecting section
- 32: Second event detecting section
- 34: Latch circuit
- 35: Control signal generating section
- 41: Individual pixel unit
- 42: Sharing section
- 43: Switch

## Claims

1. A photodetection device comprising:
a first substrate and a second substrate stacked on each other,
wherein the first substrate has a pixel group including a first pixel that generates a pixel signal according to a light amount of incident light and a second pixel that detects a luminance change of the incident light,
the second substrate has an event detection circuit that detects an event based on the luminance change of the second pixel, and
at least a part of the event detection circuit is disposed in a region other than a region of a same size facing the pixel group on the second substrate.

2. The photodetection device according to claim 1,
wherein the first substrate has a plurality of the pixel groups including a plurality of the first pixels and a plurality of the second pixels,
the second substrate has a plurality of the event detection circuits disposed adjacent to each other, and
at least a part of the plurality of event detection circuits are disposed in a region other than a region of a same size facing the plurality of pixel groups on the second substrate.

3. The photodetection device according to claim 2,
wherein the first substrate has a pixel array unit including the plurality of pixel groups, and
the event detection circuit is disposed in a region of a same size facing the pixel array unit on the second substrate.

4. The photodetection device according to claim 2, wherein the event detection circuit outputs a signal indicating whether or not each of the plurality of second pixels has detected the event in synchronization with a predetermined frame period.

5. The photodetection device according to claim 1, wherein the event detection circuit has a first differentiator and a second differentiator that respectively time-differentiate electric signals photoelectrically converted by two of the second pixels having different directions of the luminance change.

6. The photodetection device according to claim 5, wherein the event detection circuit outputs an event signal indicating that the event has been detected each time the event detection circuit detects the event, regardless of a frame period.

7. The photodetection device according to claim 1, wherein at least a part of the second pixels are disposed on the second substrate.

8. The photodetection device according to claim 7,
wherein the second pixel has:
a photoelectric conversion element;
a charge-voltage conversion unit that generates a voltage signal obtained by logarithmic conversion of a charge photoelectrically converted by the photoelectric conversion element; and
a buffer circuit that buffers the voltage signal,
the photoelectric conversion element, the charge-voltage conversion unit, and a portion of the buffer circuit are disposed on the first substrate, and
a portion other than the portion of the buffer circuit is disposed on the second substrate.

9. The photodetection device according to claim 1,
wherein the second pixel has:
a photoelectric conversion element; and
a charge-voltage conversion unit that converts a charge photoelectrically converted by the second pixel into a voltage signal subjected to logarithmic conversion, and
the charge-voltage conversion unit has a diode connected between a cathode of the photoelectric conversion element and a power supply voltage node.

10. The photodetection device according to claim 1,
wherein the second pixel has:
a photoelectric conversion element; and
a charge-voltage conversion unit that converts a charge photoelectrically converted by the second pixel into a voltage signal subjected to logarithmic conversion, and
the charge-voltage conversion unit has:
an amplifier connected to a cathode of the photoelectric conversion element; and
a bias circuit that supplies a bias current to the amplifier.

11. The photodetection device according to claim 10, wherein the charge-voltage conversion unit has a plurality of transistors of a same conductivity type, including the bias circuit.

12. The photodetection device according to claim 10,
wherein a plurality of transistors of a first conductivity type is included other than the bias circuit in the charge-voltage conversion unit, and
the bias circuit has a transistor of a second conductivity type.

13. The photodetection device according to claim 1, wherein the event detection circuit has a first circuit portion disposed on the first substrate and a second circuit portion disposed on the second substrate.

14. The photodetection device according to claim 13,
wherein the event detection circuit has:
a differentiator that time-differentiates a voltage signal output from the second pixel;
a source follower circuit that is connected to an output node of the differentiator; and
a comparator that is connected to an output node of the source follower circuit and detects the event on a basis of a result of comparing an output signal of the source follower circuit with a predetermined reference signal,
the first circuit portion has the differentiator and the source follower circuit, and
the second circuit portion has the comparator.

15. The photodetection device according to claim 13,
wherein the event detection circuit has:
a differentiator that time-differentiates a voltage signal output from the second pixel;
a source follower circuit that is connected to an output node of the differentiator; and
a comparator that is connected to an output node of the source follower circuit and detects the event on a basis of a result of comparing an output signal of the source follower circuit with a predetermined reference signal,
the first circuit portion has the differentiator, the source follower circuit, and a portion of the comparator, and
the second circuit portion has a portion other than the portion of the comparator.

16. The photodetection device according to claim 13, wherein two or more of the first circuit portions connected to two or more of the second pixels share one of the second circuit portions.

17. The photodetection device according to claim 16, further comprising:
a switch that is connected to output nodes of the two or more first circuit portions,
wherein the switch connects any one output node of the two or more first circuit portions to an input node of the second circuit portion.

18. The photodetection device according to claim 17, wherein the switch is disposed on the first substrate or the second substrate.

19. The photodetection device according to claim 3,
wherein the event detection circuit is provided for each of the plurality of second pixels, and
a plurality of the event detection circuits is disposed close to each other in a partial region on the second substrate.

20. An electronic apparatus comprising:
a photodetection device; and
a signal processing section that performs signal processing on a basis of a pixel signal and an event signal output from the photodetection device,
wherein the photodetection device includes:
a first substrate and a second substrate stacked on each other,
the first substrate has a pixel group including a first pixel that generates the pixel signal according to a light amount of incident light and a second pixel that detects a luminance change of the incident light,
the second substrate has an event detection circuit that detects an event based on the luminance change of the second pixel, and
at least a part of the event detection circuit is disposed in a region other than a region of a same size facing the pixel group on the second substrate.
